# EUROPEAN PATENT APPLICATION

(11) **EP 4 667 874 A1**
(43) Date of publication of application: **24.12.2025**
(21) Application number: 23928622.2
(22) Date of filing: 22.03.2023
(51) Int. Cl.: G01C 21/28, G05D 1/20

(54) **INFORMATION PROCESSING DEVICE, INFORMATION PROCESSING METHOD, AND PROGRAM**

(71) Applicant: HONDA MOTOR CO., LTD., Tokyo 105-8404 (JP)
(72) Inventor: HASEGAWA Takahiko, Wako-shi, Saitama 351-0193 (JP); KOMURO Misa, Wako-shi, Saitama 351-0193 (JP)
(74) Representative: Kiwit, Benedikt
(86) International application number: PCT/JP2023/011183
(87) International publication number: WO 2024/195040

(57) **Abstract**

An information processing device includes an image acquisition unit configured to acquire one or more images of surroundings of a mobile body, captured in time series, a feature point extraction unit configured to extract feature points of stationary objects captured in the images, a key point extraction unit configured to extract key points, which are different types of features from the feature points, from skeleton information of a pedestrian captured in the images, and a self-position estimation unit configured to estimate a position of the mobile body in the surroundings on the basis of the extracted feature points and the key points.

## Description

### TECHNICAL FIELD

The present invention relates to an information processing device, an information processing method, and a program.

### BACKGROUND ART

Conventionally, technologies for estimating the self-position of an autonomously traveling mobile body are known. For example, Patent Document 1 describes a technology of detecting objects present around a mobile body to generate an environmental map of the mobile body by emitting a laser around the mobile body, and receiving reflected light of the laser, and deleting a moving object from the environmental map when the moving object is detected.

### Citation List

### Patent Document

Patent Document 1: Japanese Unexamined Patent Application, First Publication No. 2022-119451

### SUMMARY OF INVENTION

### Technical Problem

The technology described in Patent Document 1 generates the environmental map on the basis of only stationary objects, without taking moving objects into account. However, for example, when a mobile body is traveling on a road crowded with people, it is not always possible to generate a highly accurate environmental map on the basis of only stationary objects, and the conventional technologies have sometimes had low robustness of self-position estimation.

The present invention has been made in consideration of these circumstances, and one of its objectives is to provide an information processing device, an information processing method, and a program that can improve the robustness of self-position estimation.

### Solution to Problem

The vehicle control device according to the present invention has adopted the following configuration.
(1): An information processing device according to one aspect of the present invention includes an image acquisition unit configured to acquire one or more images of surroundings of a mobile body, captured in time series, a feature point extraction unit configured to extract feature points of stationary objects captured in the images, a key point extraction unit configured to extract key points, which are different types of features from the feature points, from skeleton information of a pedestrian captured in the images, and a self-position estimation unit configured to estimate a position of the mobile body in the surroundings on the basis of the extracted feature points and the key points.
(2): In the aspect of (1) described above, the key point extraction unit may extract a location representing an ankle of the pedestrian as the key points.
(3): In the aspect of (1) described above, the self-position estimation unit may estimate a position of the mobile body on the basis of the extracted feature points and correct the estimated position of the mobile body using the key points.
(4): In the aspect of (3) described above, the self-position estimation unit may correct the position of the mobile body using a displacement amount of the key points between the one or more images of the pedestrian captured in time series when the pedestrian is stationary and the mobile body equipped with a camera that captures the one or more images in time series is moving.
(5): In the aspect of (3) described above, the self-position estimation unit may predict a future position of the pedestrian based on the displacement amount of the key points between the one or more images of the pedestrian captured in time series when the pedestrian and the mobile body equipped with a camera that captures the one or more images in time series are moving, and correct the position of the mobile body using the predicted future position.
(6): An information processing method according to another aspect of the present invention includes, by a computer, acquiring one or more images of the surroundings of a mobile body in time series, extracting feature points of stationary objects captured in the images, extracting key points, which are different types of features from the feature points, from skeleton information of a pedestrian captured in the images, and estimating a position of the mobile body in the surroundings on the basis of the extracted feature points and key points.
(7): A program according to still another aspect of the present invention causes a computer to execute acquiring one or more images of surroundings of a mobile body in time series, extracting feature points of stationary objects captured in the images, extracting key points, which are different types of features from the feature points, from skeleton information of a pedestrian captured in the images, and estimating a position of the mobile body in the surroundings on the basis of the extracted feature points and key points.

### Advantageous Effects of Invention

According to the aspects of (1) to (7) described above, it is possible to improve the robustness of self-position estimation.

### BRIEF DESCRIPTION OF DRAWINGS

[FIG. 1] A diagram representing an example of a configuration of a mobile body 1 and a control device 100 according to an embodiment.
[FIG. 2] A perspective view of the mobile body 1, which is viewed from above.
[FIG. 3] A diagram representing an example of an image IM acquired by an image acquisition unit 110.
[FIG. 4] A diagram for describing correction of self-position executed by a self-position estimation unit 140 when a pedestrian P is stationary.
[FIG. 5] A diagram representing another example of the image IM acquired by the image acquisition unit 110.
[FIG. 6] A diagram for describing the correction of self-position executed by the self-position estimation unit 140 when the pedestrian P is moving.
[FIG. 7] A diagram representing an example of map information 72.
[FIG. 8] A flowchart representing an example of a flow of processing executed by a control device 100.

### DESCRIPTION OF EMBODIMENTS

Hereinafter, an embodiment of an information processing device, an information processing method, and a program of the present invention will be described with reference to the drawings. The information processing device of the present invention is, for example, mounted on a mobile body. The mobile body moves on both a roadway and a predetermined area different from the roadway. The mobile body is sometimes referred to as micromobility. An electric kickboard is a type of micromobility. In addition, the mobile body may be a vehicle on which an occupant can ride, or may be an autonomous mobile body capable of autonomous traveling without a driver. The latter autonomous mobile body is used, for example, for transporting luggage. The predetermined area is, for example, a sidewalk. The predetermined area may be a part or all of a sidewalk, a bicycle lane, a public open space, and the like, or may include all of a sidewalk, bicycle lane, public open space, and the like.

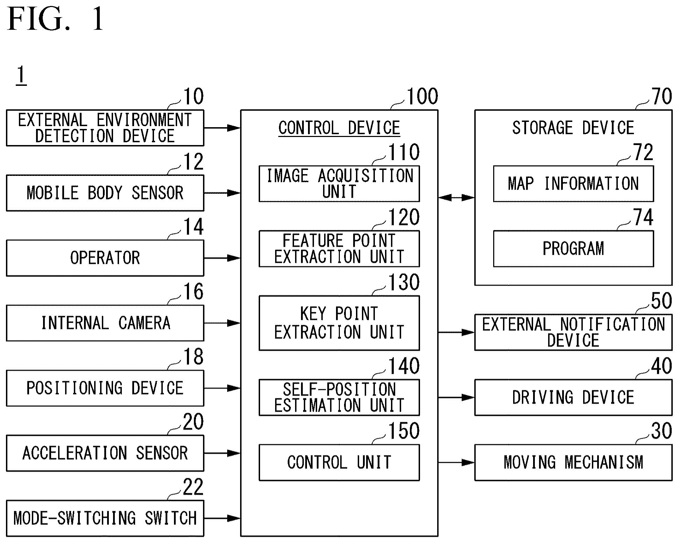

FIG. 1 is a diagram which shows an example of a configuration of a mobile body 1 and a control device 100 according to an embodiment. The mobile body 1 is equipped with, for example, an external environment detection device 10, a mobile body sensor 12, an operator 14, an internal camera 16, a positioning device 18, an acceleration sensor 20, a mode-switching switch 22, a dial switch 24, a moving mechanism 30, a driving device 40, an external notification device 50, a storage device 70, and a control device 100. Note that some of these components that are not essential for realizing functions of the present invention may be omitted.

The external environment detection device 10 is one of various devices whose detection ranges are a traveling direction of the mobile body 1. The external environment detection device 10 includes an external camera, a radar device, a light detection and ranging (LIDAR), a sensor fusion device, and the like. The external environment detection device 10 outputs information indicating a detection result (an image, an object position, and the like) to the control device 100.

The mobile body sensor 12 includes, for example, a speed sensor, a yaw rate (angular speed) sensor, an orientation sensor, and an operation amount detection sensor attached to the operator 14. The operator 14 includes, for example, an operator for instructing acceleration or deceleration (for example, an accelerator pedal or a brake pedal) and an operator for instructing steering (for example, a steering wheel). In this case, the mobile body sensor 12 may include an accelerator opening sensor, a brake depression amount sensor, a steering torque sensor, and the like. As the operator 14, the mobile body 1 may be provided with an operator of a type other than described above (for example, a non-circular rotating operator, a joystick, a button, or the like).

The internal camera 16 captures an image of at least a head of an occupant of the mobile body 1 from the front. The internal camera 16 is a digital camera that uses an imaging element such as a charge coupled device (CCD) or a complementary metal oxide semiconductor (CMOS). The internal camera 16 outputs the captured image to the control device 100.

The positioning device 18 is a device that positions a position of the mobile body 1. The positioning device 18 is, for example, a global navigation satellite system (GNSS) receiver, identifies the position of the mobile body 1 on the basis of signals received from GNSS satellites and outputs it as position information. The position information of the mobile body 1 may be estimated from a position of a Wi-Fi base station to which a communication device (to be described below) is connected.

The acceleration sensor 20 detects acceleration of the mobile body 1 and outputs a signal corresponding to the detected acceleration to the control device 100. The acceleration sensor 20 detects acceleration acting in a vertical direction (height direction) in addition to a horizontal direction of the mobile body 1.

The mode-switching switch 22 is a switch operated by the occupant. The mode-switching switch 22 may be a mechanical switch or a graphical user interface (GUI) switch set on a touch panel. The mode-switching switch 22 receives an operation of switching the driving mode to one of the following modes: a mode A: an assist mode in which one of a steering operation and an acceleration or deceleration control is performed by the occupant and the other is performed automatically and has a mode A-1 in which the steering operation is performed by the occupant and the acceleration or deceleration control is performed automatically and a mode A-2 in which the acceleration or deceleration operation is performed by the occupant and the steering control is performed automatically, a mode B: a manual driving mode in which the steering operation and the acceleration or deceleration operation are performed by the occupant, and a mode C: an automatic driving mode in which the operation control and the acceleration or deceleration control are performed automatically.

The moving mechanism 30 is a mechanism for moving the mobile body 1 on a road. The moving mechanism 30 is, for example, a group of wheels including a steering wheel and a driving wheel. The moving mechanism 30 may also be a leg for walking on multiple legs.

The driving device 40 outputs force to the moving mechanism 30 to move the mobile body 1. For example, the driving device 40 includes a motor that drives the drive wheels, a battery that stores power to be supplied to the motor, and a steering device that adjusts a steering angle of the steering wheels. The driving device 40 may include an internal combustion engine or a fuel cell as a driving force output means or a power generation means. In addition, the driving device 40 may further include a brake device that uses frictional force or air resistance.

The external notification device 50 is, for example, a lamp, a display device, a speaker, or the like that is provided on an outer plate of the mobile body 1 and that notifies information to the outside of the mobile body 1. The external notification device 50 operates differently depending on whether the mobile body 1 is moving on a sidewalk or on a roadway. For example, the external notification device 50 is controlled so that it causes a lamp to emit light when the mobile body 1 is moving on the sidewalk and it causes a lamp not to emit light when the mobile body 1 is moving on the roadway. A color of the light emitted by this lamp is preferably a color specified by law. The external notification device 50 may be controlled so that it causes the lamp to emit green light when the mobile body 1 is moving on the sidewalk and to emit blue light when the mobile body 1 is moving on the roadway. When the external notification device 50 is a display device, the external notification device 50 displays in text or graphics that the mobile body 1 is "traveling on the sidewalk" when the mobile body 1 is traveling on the sidewalk.

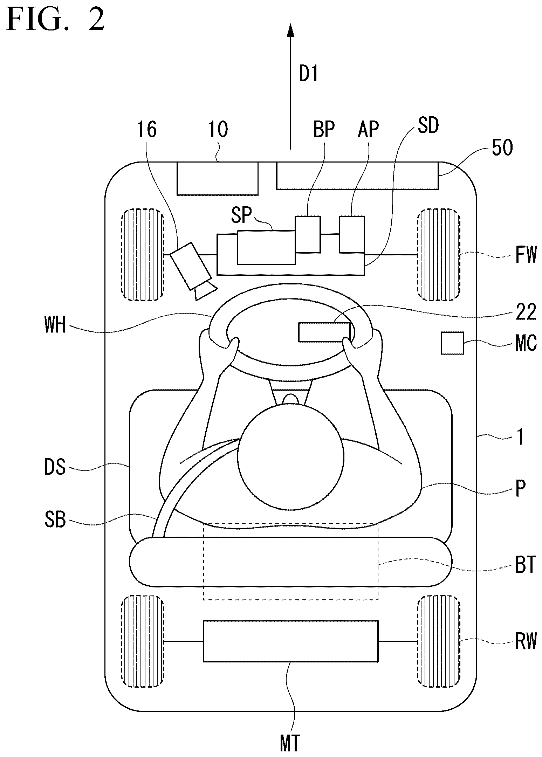

FIG. 2 is a perspective view of the mobile body 1 seen from above. In FIG. 2, FW is the steering wheel, RW is the driving wheel, SD is the steering device, MT is the motor, and BT is the battery. The steering device SD, the motor MT, and the battery BT are included in the driving device 40. In addition, AP is the accelerator pedal, BP is the brake pedal, WH is the steering wheel, SP is the speaker, and MC is the microphone. The mobile body 1 shown in FIG. 2 is a one-seater mobile body, and an occupant P is seated in the driver's seat DS and wearing a seat belt SB. An arrow D1 indicates a traveling direction (speed vector) of the mobile body 1. The external environment detection device 10 is provided near a front end of the mobile body 1, the internal camera 16 is provided at a position where a head of the occupant P can be imaged from a front of the occupant P, and the mode-switching switch 22 is provided at a boss of the steering wheel WH. In addition, the external notification device 50 is provided as a display device near the front end of the mobile body 1.

Returning to FIG. 1, the storage device 70 is a non-transient storage device such as a hard disk drive (HDD), a flash memory, or a random access memory (RAM). Map information 72 and other programs 74 executed by the control device 100 are stored in the storage device 70. In FIG. 1, the storage device 70 is shown outside a frame of the control device 100, but the storage device 70 may be included in the control device 100.

### [Control device]

The control device 100 includes, for example, an image acquisition unit 110, a feature point extraction unit 120, a key point extraction unit 130, a self-position estimation unit 140, and a control unit 150. For example, it is realized by a hardware processor such as a central processing unit (CPU) executing a program 74 (software). Some or all of these components may be realized by hardware (circuit unit; including circuitry) such as large scale integration (LSI), an application specific integrated circuit (ASIC), a field-programmable gate array (FPGA), or a graphics processing unit (GPU), or may be realized by software and hardware in cooperation. The program may be stored in advance in the storage device 70, or may be stored in a removable storage medium (non-transient storage medium) such as a DVD or a CD-ROM, and may be installed in the storage device 70 by mounting the storage medium in a drive device. A combination of the image acquisition unit 110, the feature point extraction unit 120, the key point extraction unit 130, and the self-position estimation unit 140 is an example of an "information processing device" in the claims.

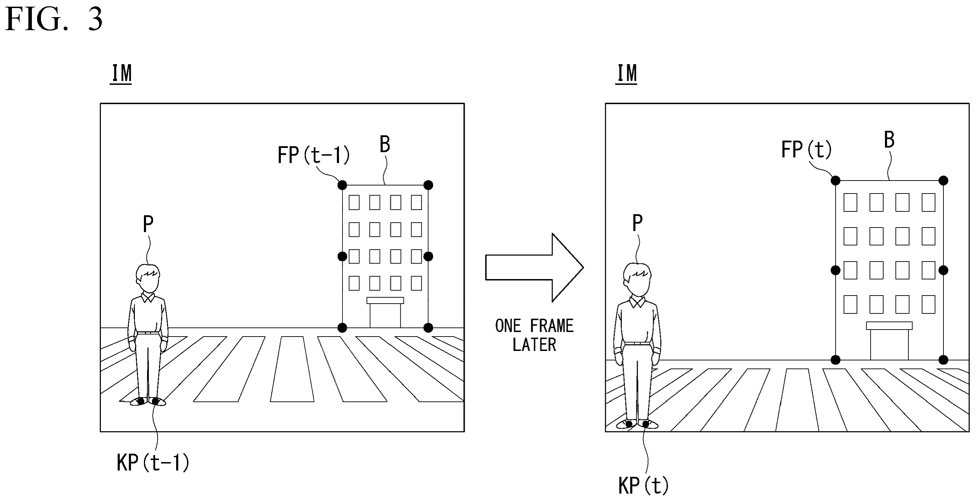

The image acquisition unit 110 acquires an image IM of the surroundings of the mobile body 1 in time series, captured by the external environment detection device 10, which is an external camera. In particular, the image acquisition unit 110 acquires the image IM of a forward traveling direction of the mobile body 1 in time series, captured by the external environment detection device 10, which is an external camera. FIG. 3 is a diagram which shows an example of the image IM acquired by the image acquisition unit 110. A left part of FIG. 3 represents the image IM acquired by the image acquisition unit 110 at a time point t-1, and a right part of FIG. 3 shows the image IM acquired by the image acquisition unit 110 at a time point t.

The feature point extraction unit 120 identifies a stationary object captured by the image acquisition unit 110 on the basis of the image IM of time series acquired by the image acquisition unit 110 and a speed of the mobile body 1, and extracts one or more feature points FP from the stationary object in the image IM using a predetermined method. Here, the predetermined method is, for example, an extraction method using a trained model that has been trained to output edges of objects (for example, buildings, road structures, and the like) captured in the image IM as a point group when the image IM is input. Alternatively, the predetermined method may be any feature point extraction method used in Visual SLAM (Simultaneous Localization and Mapping), a technology that grasps self-position in three dimensions from image data captured by a camera. For example, in FIG. 3, it is assumed that the feature point extraction unit 120 identifies a building B as a stationary object and extracts one or more feature points FP using a predetermined method.

Here, a conventional Visual SLAM determines a dynamic object such as an automobile or a pedestrian as noise, and estimates the self-position using only the feature points FP extracted from the stationary object. However, for example, when the mobile body 1 travels on a road crowded with people (in other words, a road where it is difficult to extract the feature points FP from the stationary object), it is not always possible to generate a highly accurate environmental map on the basis of only a stationary object, and the conventional technology has sometimes had low robustness in self-position estimation.

In light of the circumstances described above, the key point extraction unit 130 extracts key points, which are different types of features from the feature points of the stationary object extracted by the feature point extraction unit 120, from skeleton information of a pedestrian captured in the image IM, and the self-position estimation unit 140 estimates a self-position of the mobile body 1 on the basis of the extracted feature points and key points. More specifically, when the key point extraction unit 130 detects a pedestrian P from the image IM, it performs arbitrary skeleton recognition processing on the pedestrian P, and recognizes, for example, an ankle of the pedestrian P (more specifically, a center position of the left and right ankles) as a key point KP. The key point KP is not limited to the ankle, and may be, for example, an elbow, a knee, a pelvis, or the like. Moreover, the key point extraction unit 130 may change a type of the key point KP to be extracted for each scene in which the mobile body 1 is traveling. For example, when an inclination or roughness of a road surface on which the mobile body 1 is traveling is equal to or greater than a threshold value (that is, when it is assumed that a positional fluctuation of the ankle will become greater), the key point extraction unit 130 may change the key point KP to be extracted from the ankle to the pelvis.

When the pedestrian P from which the key point KP is extracted is stationary between frames (that is, when a position of the key point KP is unchanged between frames, taking into account the speed of the mobile body 1), the self-position estimation unit 140 first identifies the position of the mobile body 1 on the basis of the extracted feature point FP, and then estimates the position of the mobile body 1 by correcting the identified position of the mobile body 1 using the key point KP.

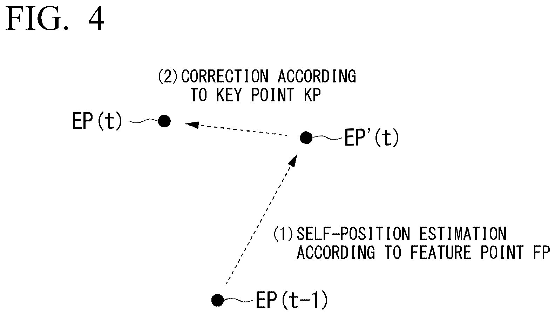

FIG. 4 is a diagram for describing self-position correction executed by the self-position estimation unit 140 when the pedestrian P is stationary. In FIG. 4, a symbol EP(t-1) indicates a self-position estimated one frame before, a symbol EP'(t) indicates a self-position identified on the basis of the feature point FP at the time point t, and a symbol EP(t) indicates a finally estimated self-position by correcting the identified EP'(t).

The self-position estimation unit 140 first measures a displacement amount d1 between a previous feature point FP(t-1) and a current feature point FP(t) between frames, and identifies a self-position EP'(t) by shifting a previous self-position EP(t-1) by the measured displacement amount d1. The self-position estimation unit 140 then measures a displacement amount d2 between a previous key point KP(t-1) and a current key point KP(t) between frames, and estimates a final self-position EP(t) by, for example, shifting the self-position EP'(t) by a correction amount corresponding to d2-d1. Note that the correction amount at this time may be, for example, an intermediate value (d2-d1)/2 between a displacement amount of the feature point and a displacement amount of the key point, and may be an amount as long as it takes into account at least the displacement amount of the key point.

In this manner, according to the present embodiment, in addition to the feature point FP, a small number of key points KP are extracted from the skeleton information of a dynamic object such as the pedestrian P, and are used for estimating the self-position. In general, the number of key points extracted from the skeleton information is smaller than the number of feature points FP detected by the conventional visual SLAM, and errors tend to be less likely to occur in tracking in time series. For this reason, by estimating the self-position using both the feature point FP and the key point KP, robustness of self-position estimation can be improved. In particular, for example, when the mobile body 1 is traveling on a road crowded with people (in other words, a road where it is difficult to extract the feature point FP from a stationary object), even if the feature point FP cannot be sufficiently acquired for estimating the self-position, the self-position can be robustly estimated by utilizing the key point KP.

An estimation method in FIG. 4 in a situation shown in FIG. 3 is based on an assumption that the pedestrian P is stationary. However, the present invention can also be applied even when the pedestrian P is moving. Below, a method of estimating the self-position using the feature point FP and the key point KP when the pedestrian P is moving will be described.

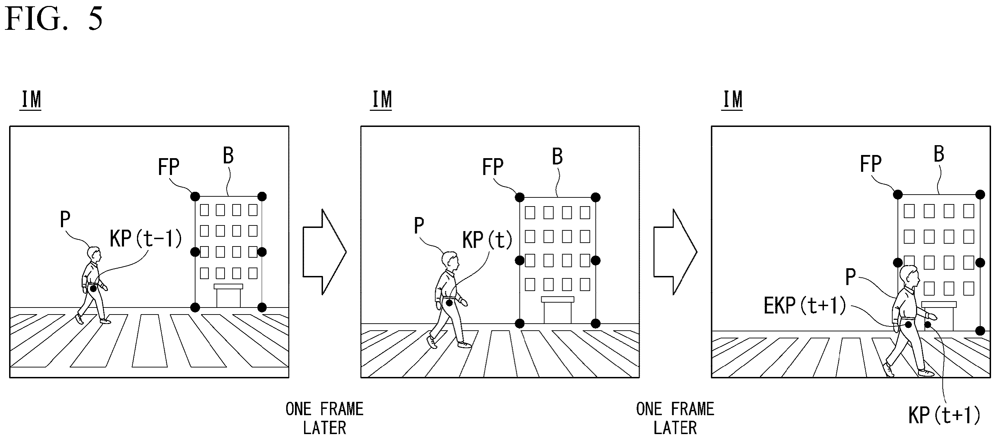

FIG. 5 is a diagram which shows another example of the image IM acquired by the image acquisition unit 110. A left part of FIG. 5 represents the image IM acquired by the image acquisition unit 110 at the time point t-1, a center part of FIG. 5 represents the image IM acquired by the image acquisition unit 110 at the time point t, and a right part of FIG. 5 represents the image IM acquired by the image acquisition unit 110 at a time point t+1. Furthermore, in the right part of FIG. 5, EKP(t+1) represents a position of a key point KP(t+1) at the time point t+1 estimated on the basis of a position of the key point KP(t-1) at the time point t-1 and a position of the key point KP(t) at the time point t.

More specifically, when the key point extraction unit 130 detects the pedestrian P from the image IM, it performs arbitrary skeleton recognition processing on the pedestrian P, and recognizes, for example, the pelvis of the pedestrian P as the key point KP. When the pedestrian P from which the key point KP is extracted moves between frames (between frames at the time points t-1 and t in FIG. 5) (that is, when the position of the key point KP moves between frames, taking into account the speed of the mobile body 1), the self-position estimation unit 140 first predicts the position of the key point KP at the time point t+1 on the basis of the displacement amount and the time of the key point KP between frames.

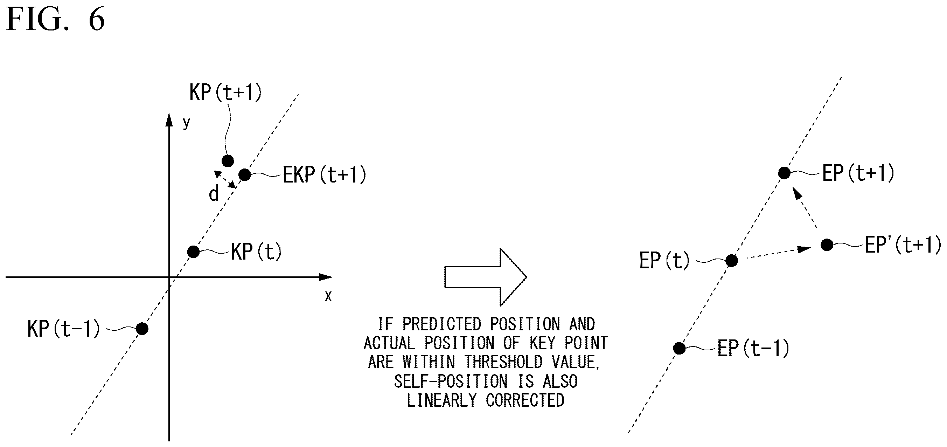

FIG. 6 is a diagram for describing the self-position correction executed by the self-position estimation unit 140 when the pedestrian P is moving. A left part of FIG. 6 represents a method for predicting the position of the key point KP, and a right part of FIG. 6 represents a method for correcting the self-position according to a predicted position of the key point KP.

As shown in the left part of FIG. 6, the self-position estimation unit 140 assumes that the pedestrian P is moving straight at a constant speed, and predicts the position of EKP(t+1) as a point on a two-dimensional plane that is on a line connecting the position of the key point KP(t-1) and the position of the key point KP(t) at the time point t, and where a distance between the key point KP(t-1) and the key point KP(t) is the same as a distance between the key point KP(t) and the key point EKP(t+1). Next, the self-position estimation unit 140 calculates a deviation d between the predicted position EKP(t+1) and the actual position KP(t+1) at the time point t+1, and determines whether the calculated deviation d is within a threshold value.

When it is determined that the deviation d is within the threshold value, the self-position estimation unit 140 determines that the pedestrian P is moving straight at a constant speed (that is, moving linearly), and therefore determines that the mobile body 1 which has measured the linear movement of the pedestrian P, is also moving linearly. For this reason, when the self-position EP(t-1) before last, the previous self-position EP(t), and a self-position EP'(t+1) identified on the basis of a current feature point FP(t+1) do not have a linear relationship, the self-position estimation unit 140 corrects the self-position EP'(t+1) so that it has a linear relationship with the self-position EP(t-1) before last and the previous self-position EP(t), and estimates the current self-position EP(t+1). As in a case of FIG. 4, an amount of correction at this time may be an amount as long as at least the linear relationship described above is taken into account, and may also be an amount of correcting the self-position EP'(t+1) identified on the basis of the current feature point FP(t+1) to a midpoint with a self-position with which the linear relationship is established.

In this manner, even when the pedestrian P is moving, the self-position estimation unit 140 determines whether the pedestrian P is moving linearly on the basis of a displacement amount of a key point KP of the pedestrian P, and when it is determined that the pedestrian P is moving linearly, the self-position of the mobile body 1 is also corrected so that it has a linear transition in time series. In other words, even when the feature point FP cannot be sufficiently acquired for estimating the self-position, the self-position can be robustly estimated by utilizing the key point KP.

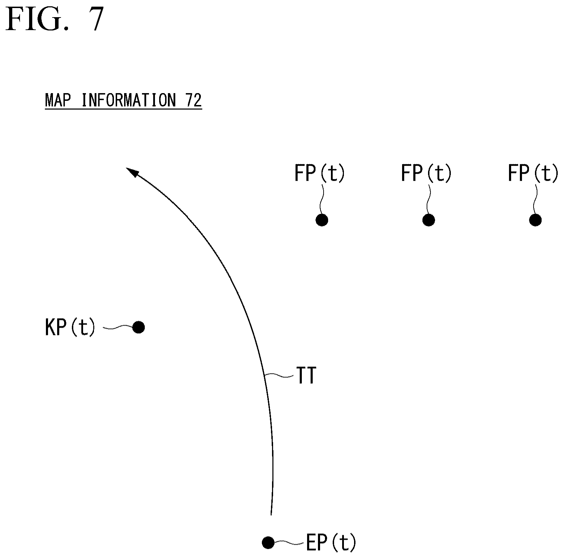

The self-position estimation unit 140 stores information including the extracted feature point FP and key point KP, and the estimated self-position as map information 72 in the storage device 70. FIG. 7 is a diagram which shows an example of the map information 72. The map information 72 includes, for example, the feature points FP(t) and key points KP(t) extracted from the image IM at each time point t, and the estimated self-position EP(t) as point group data. The point group data in this case may be extracted raw three-dimensional data, or may be two-dimensional data obtained by projecting the three-dimensional data onto a bird's-eye view coordinate system.

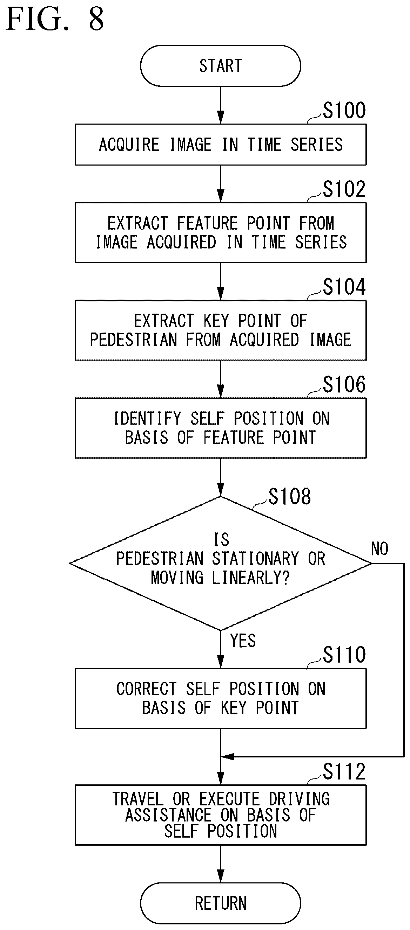

The control unit 150 controls the driving device 40 according to a set driving mode while referring to the map information 72, and executes driving assistance for the occupant. For example, when the driving mode is set to an automatic driving mode, the control unit 150 detects a free space from the map information 72, detects the free space from the map information 72, and controls the driving device 40 so that the mobile body 1 travels within the free space, starting from the estimated self-position. For example, in a case of a three-dimensional map MP1 in FIG. 8, the control unit 150 may detect a space between left and right planes as a free space. Moreover, for example, in a case of the two-dimensional map MP2 in FIG. 8, the control unit 150 may detect a space between left and right straight lines as a free space. When the driving mode is set to a manual driving mode, the control unit 150 displays the map information 72 on the external notification device 50, which is a display device, and the occupant can drive while referring to the map information 72 displayed on the display device.

Next, a flow of processing executed by the control device 100 will be described with reference to FIG. 8. FIG. 8 is a flowchart showing an example of the flow of processing executed by the control device 100.

First, the image acquisition unit 110 acquires the image IM of the surroundings of the mobile body 1 captured in time series by the external environment detection device 10, which is an external camera (step S100). Next, the feature point extraction unit 120 extracts one or more feature points from the acquired image IM using a predetermined method (step S102). Next, the key point extraction unit 130 extracts key points of the pedestrian from the acquired image IM (step S104). Next, the self-position estimation unit 140 identifies the self-position on the basis of the extracted feature points (step S106).

Next, the self-position estimation unit 140 determines whether the pedestrian is stationary or moving linearly on the basis of the image IM of time series (step S108). When it is determined that the pedestrian is stationary or moving linearly, the self-position estimation unit 140 corrects the self-position on the basis of the extracted key points (step S110). Next, the control unit 150 causes the mobile body 1 to travel or executes driving assistance for the mobile body 1 on the basis of the corrected self-position (step S112). On the other hand, when it is determined that the pedestrian is not stationary and not moving linearly, the self-position estimation unit 140 causes the mobile body 1 to travel or executes the driving assistance for the mobile body 1 on the basis of the self-position identified in step S106. As a result, the processing of this flowchart will end.

According to the present embodiment described above, one or more images of surroundings of a mobile body captured in time series are acquired, feature points of a stationary object captured in an image are extracted, key points, which are a different type of feature from the feature points, are extracted from skeleton information of a pedestrian captured in the image, and a position of the mobile body in the surroundings is estimated on the basis of the extracted feature points and key points. As a result, it is possible to improve the robustness of self-position estimation.

Embodiments described above can be expressed as follows.

A vehicle control device includes a storage device that has stored a program and a hardware processor, in which the hardware processor executes the program, thereby acquiring one or more images of surroundings of a mobile body, captured in time series, extracting feature points of a stationary object shown in the image, extracting key points, which are features of a different type from the feature points, from skeleton information of a pedestrian shown in the image, and estimating a position of the mobile body in the surroundings on the basis of the extracted feature points and key points.

The above describes a form for carrying out the present invention using an embodiment, but the present invention is not limited to such an embodiment, and various modifications and substitutions can be made within a range that does not deviate from the gist of the present invention.

### REFERENCE SIGNS LIST

10 External environment detection device
12 Mobile body sensor
14 Operator
16 Internal camera
18 Positioning device
20 Acceleration sensor
22 Mode-switching switch
30 Moving mechanism
40 Driving device
50 External notification device
70 Storage device
100 Control device
110 Image acquisition unit
120 Feature point extraction unit
130 Key point extraction unit
140 Self-position estimation unit
150 Control unit

## Claims

1. An information processing device comprising:
an image acquisition unit configured to acquire one or more images of surroundings of a mobile body, captured in time series;
a feature point extraction unit configured to extract feature points of stationary objects captured in the images;
a key point extraction unit configured to extract key points, which are different types of features from the feature points, from skeleton information of a pedestrian captured in the images; and
a self-position estimation unit configured to estimate a position of the mobile body in the surroundings on the basis of the extracted feature points and the key points.

2. The information processing device according to claim 1,
wherein the key point extraction unit extracts a location representing an ankle of the pedestrian as the key points.

3. The information processing device according to claim 1,
wherein the self-position estimation unit estimates a position of the mobile body on the basis of the extracted feature points and corrects the estimated position of the mobile body using the key points.

4. The information processing device according to claim 3,
wherein the self-position estimation unit corrects the position of the mobile body using a displacement amount of the key points between the one or more images of the pedestrian captured in time series when the pedestrian is stationary and the mobile body equipped with a camera that captures the one or more images in time series is moving.

5. The information processing device according to claim 3,
wherein the self-position estimation unit predicts a future position of the pedestrian based on the displacement amount of the key points between the one or more images of the pedestrian captured in time series when the pedestrian and the mobile body equipped with a camera that captures the one or more images in time series are moving, and corrects the position of the mobile body using the predicted future position.

6. An information processing method comprising:
by a computer,
acquiring one or more images of the surroundings of a mobile body in time series;
extracting feature points of stationary objects captured in the images;
extracting key points, which are different types of features from the feature points, from skeleton information of a pedestrian captured in the images; and
estimating a position of the mobile body in the surroundings on the basis of the extracted feature points and key points.

7. A program causing a computer to execute:
acquiring one or more images of surroundings of a mobile body in time series,
extracting feature points of stationary objects captured in the images,
extracting key points, which are different types of features from the feature points, from skeleton information of a pedestrian captured in the images, and
estimating a position of the mobile body in the surroundings on the basis of the extracted feature points and key points.
